(19) **Europäisches Patentamt**

**European Patent Office**

**Office européen des brevets**

(11) **EP 4 465 668 A2**

(12) **EUROPEAN PATENT APPLICATION**

(43) Date of publication:
**20.11.2024 Bulletin 2024/47**

(21) Application number: **24155951.7**

(22) Date of filing: **06.02.2024**

(51) International Patent Classification (IPC):
*H04W 4/70* $^{(2018.01)}$    *H04W 12/06* $^{(2021.01)}$
*H04L 9/40* $^{(2022.01)}$    *H04L 9/32* $^{(2006.01)}$

(52) Cooperative Patent Classification (CPC):
**H04W 4/70; H04W 12/06;** H04L 9/3228;
H04L 63/0838; H04L 67/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023   US 202363466368 P**

(71) Applicant: **Nokia Technologies Oy
02610 Espoo (FI)**

(72) Inventors:
- **BARACCA, Paolo
  Munich (DE)**
- **BARBU, Oana-Elena
  Aalborg (DK)**
- **VEJLGAARD, Benny
  Gistrup (DK)**

(74) Representative: **Nokia EPO representatives
Nokia Technologies Oy
Karakaari 7
02610 Espoo (FI)**

(54) **AUTHENTICATION REPETITION PROCEDURE PROTOCOL FOR AMBIENT IOT**

(57)    In a system, apparatus, method, and non-transitory computer readable medium related to an authentication repetition procedure protocol for ambient internet of things (IoT) devices, an activator node may obtain an authentication configuration associated with at least one device, the authentication configuration including repetition information, the repetition information including at least one of a repetition number parameter and a repetition delay parameter, and transmit at least a first activation signal of a plurality of activation signals to the at least one device based on the repetition information, the first activation signal causing the at least one device to transmit a responsive signal to at least one reader node.

EP 4 465 668 A2

**Description**

BACKGROUND

*Field*

Various example embodiments relate to methods, apparatuses, systems, and/or non-transitory computer readable media for providing an authentication repetition procedure protocol for ambient Internet of Things (IoT) devices, passive radio devices, semi-passive radio devices, active radio devices with limited and/or no energy storage capabilities, etc.

*Description of the Related Art*

The 3rd Generation Partnership Project (3GPP) 5th generation mobile network (5G) standard, referred to as 5G New Radio (NR), is being developed to provide higher capacity, higher reliability, and lower latency communications than the 4G long term evolution (LTE) standard.

There have been proposals to extend the 5G NR standard to provide communication support for passive and semi-passive Internet of Things (IoT) devices which may have reduced processing, memory, and/or energy capabilities in comparison to active IoT devices and/or standard user equipment (UE) devices, such as mobile phones, smartphones, etc. Passive IoT devices (and/or passive UE devices, passive tag devices, passive radio devices, backscatter IoT devices (B-IoT devices), B-IoT tag devices, B-IoT radio devices, semi-passive IoT devices, semi-passive UE devices, semi-passive tag devices, semi-passive radio devices, ambient IoT devices, ambient UE devices, ambient tag devices, ambient radio devices, etc.) are devices which are incapable of initiating communication with the 3GPP network (e.g., device-initiated attachment to the network, etc.) by transmitting data to a base station of the network, etc., and instead, the network must initiate communication (e.g., perform a network-initiated attachment procedure with the device, etc.) with the IoT device. Passive IoT devices may include wireless tags, wireless sensors, industrial wireless sensors, utility meters, environmental sensors, machine-specific monitoring, static and/or mobile asset tracking, video surveillance devices, and/or wearable smart devices, etc. Passive IoT devices may operate in extreme environmental conditions, e.g., high pressure environments, extreme temperatures, high humidity environments, be subject to constant motion and/or vibrations, etc. Additionally, passive IoT devices may have ultra-low complexity (e.g., to facilitate low cost), small physical sizes and/or small form factors, may desire and/or require maintenance-free operation (e.g., without human intervention), and/or may desire and/or require longer device life cycles, etc. Moreover, the passive IoT device may have limited on-device energy storage capacity and/or may be a battery-less IoT device, etc.

Accordingly, some passive IoT devices may include, may be used with, and/or may be connected to energy harvesting (EH) devices, such as solar panels, wind turbines, heat capture devices, radio frequency (RF) energy harvesting devices, kinetic energy harvesting devices, back-scattering circuitry, etc., which may collect energy for storage in a low-capacity power storage device included in the passive IoT device and/or may power the operation of a battery-less passive IoT device.

SUMMARY

At least one example embodiment is related to an activator node.

In at least one example embodiment, the activator node may include a memory storing computer readable instructions, and processing circuitry configured to execute the computer readable instructions to cause the activator node to, obtain an authentication configuration associated with at least one device, the authentication configuration including repetition information, the repetition information including at least one of a repetition number parameter and a repetition delay parameter, and transmit at least a first activation signal of a plurality of activation signals to the at least one device based on the repetition information, the first activation signal causing the at least one device to transmit a responsive signal to at least one reader node.

Some example embodiments provide that the repetition information includes the repetition number parameter, and the repetition number parameter includes a fixed number of repetitions for transmission of the activation signals to the at least one device, and the activator node is further caused to, determine whether to transmit at least one second activation signal of the plurality of activation signals to the at least one device based on an authentication status of the at least one device determined by the at least one reader node, and transmit the at least one second activation signal of the plurality of activation signals to the at least one device according to the fixed number of repetitions based on results of the determination.

Some example embodiments provide that the activator node is further caused to, receive the repetition information from a network node, the repetition information including the repetition number parameter, and the repetition number parameter including a pseudo-random number of repetitions for transmission of the activation signal to the at least one device, determine whether to transmit at least one second activation signal of the plurality of activation signals to the at least one device based on an authentication status of the at least one device determined by the at least one reader node, and transmit the at least one second activation signal of the plurality of activation signals to the at least one device according to the pseudo-random number of repetitions based on results of the determination.

Some example embodiments provide that the activator node is further caused to, receive the repetition information from a network node, the repetition information including the repetition number parameter, and the repetition number parameter including a seed for pseudo-randomly generating the number of repetitions for transmission of the activation signal to the at least one device, determine a pseudo-random number of repetitions using the seed, determine whether to transmit at least one second activation signal of the plurality of activation signals to the at least one device based on an authentication status of the at least one device determined by the at least one reader node, and transmit the at least one second activation signal of the plurality of activation signals to the at least one device according to the pseudo-random number of repetitions based on results of the determination.

Some example embodiments provide that the at least one device includes a single Internet of Things (IoT) device or a plurality of IoT devices, and a different pseudo-random number of repetitions for transmission is determined for each IoT device of the plurality of IoT devices.

Some example embodiments provide that the authentication configuration includes the repetition delay parameter, and the repetition delay parameter includes a fixed delay period between transmissions of the plurality of activation signals to the at least one device, and the activator node is further caused to, determine whether to transmit at least one second activation signal of the plurality of activation signals to the at least one device based on an authentication status of the at least one device determined by the at least one reader node, and transmit the at least one second activation signal to the at least one device according to the fixed delay period based on results of the determination.

Some example embodiments provide that the activator node is further caused to, receive the repetition information from a network node, the repetition information including the repetition delay parameter, and the repetition delay parameter including at least one pseudo-random delay period between transmissions of the plurality of activation signals to the at least one device, determine whether to transmit at least one second activation signal of the plurality of activation signals to the at least one device based on an authentication status of the at least one device determined by the at least one reader node, and transmit the at least one second activation signal of the plurality of activation signals to the at least one device according to the at least one pseudo-random delay period based on results of the determination.

Some example embodiments provide that the activator node is further caused to, receive the repetition information from a network node, the repetition information including the repetition delay parameter, and the repetition delay parameter including a seed for pseudo-randomly generating a delay period between transmissions of the plurality of activation signals to the at least one device, determine whether to transmit at least one second activation signal of the plurality of activation signals to the at least one device based on an authentication status of the at least one device determined by the at least one reader node, determine at least one pseudo-random delay period using the seed, and transmit the at least one second activation signal of the plurality of activation signals to the at least one device according to the at least one pseudo-random delay period based on results of the determination.

Some example embodiments provide that the activator node is further caused to, receive an authentication message from the at least one reader node corresponding to the at least one device, the authentication message indicating that the at least one device is not authenticated, and disable transmission of remaining activation signals of the plurality of activation signals to the at least one device based on the authentication message.

Some example embodiments provide that the authentication configuration includes a set of carrier indexes for transmission of the activation signal to the at least one device, and the activator node is further caused to transmit at least one second activation signal of the plurality of activation signals to the at least one device according to the set of carrier indexes.

Some example embodiments provide that the authentication configuration includes a set of transmission power levels for transmission of the activation signal to the at least one device, and the activator node is further caused to transmit at least one second activation signal of the plurality of activation signals to the at least one device according to the set of transmission power levels.

At least one example embodiment is related to a reader node.

In at least one example embodiment, the reader node may include a memory storing computer readable instructions, and processing circuitry configured to execute the computer readable instructions to cause the reader node to, obtain authentication configuration associated with at least one device, the authentication configuration including at least one of a repetition number parameter and a repetition delay parameter, determine whether at least one responsive signal is received from the at least one device in response to a first activation signal transmitted to the at least one device by an activator node, and determine whether the at least one device is authentic based on results of the determination of whether the at least one responsive signal was received and the authentication configuration.

Some example embodiments provide that the authentication configuration includes the repetition number parameter, and the repetition number parameter includes a number of repetitions for transmission of a plurality of activation signals to the at least one device by the activator node, and the reader node is further caused to, determine whether a number of responsive signals received from the at least one device in response to the plurality of activation signals transmitted to the at least one device by the activator node matches the number of repetitions, and determine whether the at least one device is authentic based on results of the determination of the number of responsive signals matching the number of repetitions.

Some example embodiments provide that the authentication configuration includes the repetition delay parameter, and the repetition delay parameter includes at least one delay period between transmissions of a plurality of activation signals to the at least one device, and the reader node is further caused to, determine an elapsed time between each responsive signal received from the at least one device in response to the plurality of activation signals transmitted to the at least one device by the activator node, and determine whether the at least one device is authentic based on the determined elapsed time, the delay period, and an estimated differential time between the at least one device and the reader node.

Some example embodiments provide that the delay period is at least one of a fixed delay period between transmissions of a plurality of activation signals to the at least one device, or a set of pseudo-random delay periods between transmissions of the plurality of activation signals to the at least one device.

Some example embodiments provide that the authentication configuration further includes a set of carrier indexes for transmission of the activation signal to the at least one device, and the reader node is further caused to, determine a carrier index of each responsive signal received from the at least one device in response to the plurality of activation signals transmitted to the at least one device by the activator node, and determine whether the at least one device is authentic based on the determined carrier index of each responsive signal and the set of carrier indexes.

Some example embodiments provide that the authentication configuration further includes a set of transmission power levels for transmission of the activation signal to the at least one device, and the reader node is further caused to, determine a reception power level of each responsive signal received from the at least one device in response to the plurality of activation signals transmitted to the at least one device by the activator node, and determine whether the at least one device is authentic based on the reception power level of each responsive signal and the set of transmission power levels.

Some example embodiments provide that the reader node is further caused to transmit an authentication message to the activator node corresponding to the at least one device, the authentication message indicating results of the determination of whether the at least one device is authentic.

At least one example embodiment is related to a method of operating an activator node.

In at least one example embodiment, the method may include obtaining authentication configuration associated with at least one device, the authentication configuration including repetition information, the repetition information including at least one of a repetition number parameter and a repetition delay parameter, and transmitting at least a first activation signal of a plurality of activation signals to the at least one device based on the repetition information, the first activation signal causing the at least one device to transmit a responsive signal to at least one reader node.

Some example embodiments provide that the repetition information includes the repetition number parameter and the repetition delay parameter, the repetition number parameter including a number of repetitions for transmission of the activation signal to the at least one device, and the repetition delay parameter including a delay period between transmissions of the plurality of activation signals to the at least one device, and the method further includes determining whether to transmit at least one second activation signal of the plurality of activation signals to the at least one device based on an authentication status of the at least one device determined by the at least one reader node, and transmitting at least one second activation signal of the plurality of activation signals to the at least one device according to the number of repetitions and the delay period.

At least one example embodiment is related to an activator node.

In at least one example embodiment, the activator node may include means for obtaining an authentication configuration associated with at least one device, the authentication configuration including repetition information, the repetition information including at least one of a repetition number parameter and a repetition delay parameter, and transmitting at least a first activation signal of a plurality of activation signals to the at least one device based on the repetition information, the first activation signal causing the at least one device to transmit a responsive signal to at least one reader node.

Some example embodiments provide that the repetition information includes the repetition number parameter, and the repetition number parameter includes a fixed number of repetitions for transmission of the activation signals to the at least one device, and the activator node further includes means for, determining whether to transmit at least one second activation signal of the plurality of activation signals to the at least one device based on an authentication status of the at least one device determined by the at least one reader node, and transmitting the at least one second activation signal of the plurality of activation signals to the at least one device according to the fixed number of repetitions based on results of the determination.

Some example embodiments provide that the activator node further includes means for, receiving the repetition information from a network node, the repetition information including the repetition number parameter, and the repetition number parameter including a pseudo-random number of repetitions for transmission of the activation signal to the at least one device, determining whether to transmit at least one second activation signal of the plurality of activation signals to the at least one device based on an authentication status of the at least one device determined by the at least one reader node, and transmitting the at least one second activation signal of the plurality of activation signals to the at least one device according to the pseudo-random number of repetitions based on results of the determination.

Some example embodiments provide that the activator node further includes means for, receiving the repetition information from a network node, the repetition information including the repetition number parameter, and the repetition number parameter including a seed for pseudo-randomly generating the number of repetitions for transmission of the activation signal to the at least one device, determining a pseudo-random number of repetitions using the seed, determining whether to transmit at least one second activation signal of the plurality of activation signals to the at least one device based on an authentication status of the at least one device determined by the at least one reader node, and transmitting the at least one second activation signal of the plurality of activation signals to the at least one device according to the pseudo-random number of repetitions based on results of the determination.

Some example embodiments provide that the at least one device includes a single Internet of Things (IoT) device or a plurality of IoT devices, and a different pseudo-random number of repetitions for transmission is determined for each IoT device of the plurality of IoT devices.

Some example embodiments provide that the authentication configuration includes the repetition delay parameter, and the repetition delay parameter includes a fixed delay period between transmissions of the plurality of activation signals to the at least one device, and the activator node further includes means for, determining whether to transmit at least one second activation signal of the plurality of activation signals to the at least one device based on an authentication status of the at least one device determined by the at least one reader node, and transmitting the at least one second activation signal to the at least one device according to the fixed delay period based on results of the determination.

Some example embodiments provide that the activator node further includes means for, receiving the repetition information from a network node, the repetition information including the repetition delay parameter, and the repetition delay parameter including at least one pseudo-random delay period between transmissions of the plurality of activation signals to the at least one device, determining whether to transmit at least one second activation signal of the plurality of activation signals to the at least one device based on an authentication status of the at least one device determined by the at least one reader node, and transmitting the at least one second activation signal of the plurality of activation signals to the at least one device according to the at least one pseudo-random delay period based on results of the determination.

Some example embodiments provide that the activator node further includes means for, receiving the repetition information from a network node, the repetition information including the repetition delay parameter, and the repetition delay parameter including a seed for pseudo-randomly generating a delay period between transmissions of the plurality of activation signals to the at least one device, determining whether to transmit at least one second activation signal of the plurality of activation signals to the at least one device based on an authentication status of the at least one device determined by the at least one reader node, determining at least one pseudo-random delay period using the seed, and transmitting the at least one second activation signal of the plurality of activation signals to the at least one device according to the at least one pseudo-random delay period based on results of the determination.

Some example embodiments provide that the activator node further includes means for, receiving an authentication message from the at least one reader node corresponding to the at least one device, the authentication message indicating that the at least one device is not authenticated, and disabling transmission of remaining activation signals of the plurality of activation signals to the at least one device based on the authentication message.

Some example embodiments provide that the authentication configuration includes a set of carrier indexes for transmission of the activation signal to the at least one device, and the activator node further includes means for transmitting at least one second activation signal of the plurality of activation signals to the at least one device according to the set of carrier indexes.

Some example embodiments provide that the authentication configuration includes a set of transmission power levels for transmission of the activation signal to the at least one device, and the activator node further includes means for transmitting at least one second activation signal of the plurality of activation signals to the at least one device according to the set of transmission power levels.

At least one example embodiment is related to a reader node.

In at least one example embodiment, the reader node may include means for, obtaining authentication configuration associated with at least one device, the authentication configuration including at least one of a repetition number parameter and a repetition delay parameter, determining whether at least one responsive signal is received from the at least one device in response to a first activation signal transmitted to the at least one device by an activator node, and determining whether the at least one device is authentic based on results of the determination of whether the at least one responsive signal was received and the authentication configuration.

Some example embodiments provide that the authentication configuration includes the repetition number parameter, and the repetition number parameter includes a number of repetitions for transmission of a plurality of activation signals to the at least one device by the activator node, and the reader node further includes means for, determining whether a number of responsive signals received from the at least one device in response to the plurality of activation signals transmitted to the at least one device by the activator node matches the number of repetitions, and determining whether the at least one device is authentic based on results of the determination of the number of responsive signals matching the number of repetitions.

Some example embodiments provide that the authentication configuration includes the repetition delay parameter, and the repetition delay parameter includes at least one delay period between transmissions of a plurality of activation signals to the at least one device, and the reader node further includes means for, determining an elapsed time between each responsive signal received from the at least one device in response to the plurality of activation signals transmitted to the at least one device by the activator node, and determining whether the at least one device is authentic based on the determined elapsed time, the delay period, and an estimated differential time between the at least one device and the reader node.

Some example embodiments provide that the delay period is at least one of a fixed delay period between transmissions of a plurality of activation signals to the at least one device, or a set of pseudo-random delay periods between transmissions of the plurality of activation signals to the at least one device.

Some example embodiments provide that the authentication configuration further includes a set of carrier indexes for transmission of the activation signal to the at least one device, and the reader node further includes means for, determining a carrier index of each responsive signal received from the at least one device in response to the plurality of activation signals transmitted to the at least one device by the activator node, and determining whether the at least one device is authentic based on the determined carrier index of each responsive signal and the set of carrier indexes.

Some example embodiments provide that the authentication configuration further includes a set of transmission power levels for transmission of the activation signal to the at least one device, and the reader node further includes means for, determining a reception power level of each responsive signal received from the at least one device in response to the plurality of activation signals transmitted to the at least one device by the activator node, and determining whether the at least one device is authentic based on the reception power level of each responsive signal and the set of transmission power levels.

Some example embodiments provide that the reader node further includes means for transmitting an authentication message to the activator node corresponding to the at least one device, the authentication message indicating results of the determination of whether the at least one device is authentic.

BRIEF DESCRIPTION OF THE DRAWINGS

The accompanying drawings, which are incorporated in and constitute a part of the specification, illustrate one or more example embodiments and, together with the description, explain these example embodiments. In the drawings:

FIG. 1 illustrates a wireless communication system according to at least one example embodiment;
FIG. 2 illustrates a block diagram of an example network element, an example activator node, and/or an example reader node according to at least one example embodiment;
FIG. 3 illustrates a block diagram of an example IoT device according to at least one example embodiment;
FIG. 4 is an example transmission flow diagram illustrating a first authentication process according to at least one example embodiment;
FIG. 5 is an example transmission flow diagram illustrating a second authentication process according to at least one example embodiment;
FIG. 6 illustrates an example transmission flow diagram illustrating a third authentication process according to at least one example embodiment; and
FIG. 7 illustrates an example pseudo-random number generator according to at least one example embodiment.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing the example embodiments. The example embodiments may, however, be embodied in many alternate forms and should not be construed as limited to only the example embodiments configured forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the example embodiments. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting of the example embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of the example embodiments. However, it will be understood by one of ordinary skill in the art that example embodiments may be practiced without these specific details. For example, systems may be shown in block diagrams in order not to obscure the example embodiments in unnecessary detail. In other instances, well-known processes, structures and techniques may be shown without unnecessary detail in order to avoid obscuring example embodiments.

Also, it is noted that example embodiments may be described as a process depicted as a flowchart, a flow diagram, a data flow diagram, a structure diagram, or a block diagram. Although a flowchart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, a function, a procedure, a subroutine, a subprogram, etc. When a process corresponds to a function, its termination may correspond to a return of the function to the calling function or the main function.

Moreover, as disclosed herein, the term "memory" may represent one or more devices for storing data, including random access memory (RAM), magnetic RAM, core memory, and/or other machine readable mediums for storing information. The term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" may include, but is not limited to, portable or fixed storage devices, optical storage devices, wireless channels, and various other mediums capable of storing, containing or carrying instruction(s) and/or data.

Furthermore, example embodiments may be implemented by hardware circuitry and/or software, firmware, middleware, microcode, hardware description languages, etc., in combination with hardware (e.g., software executed by hardware, etc.). When implemented in software, firmware, middleware or microcode, the program code or code segments to perform the desired tasks may be stored in a machine or computer readable medium such as a non-transitory computer storage medium, and loaded onto one or more processors to perform the desired tasks.

A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

As used in this application, the term "circuitry" and/or "hardware circuitry" may refer to one or more or all of the following: (a) hardware-only circuit implementation (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s)), software, and memory(ies) that work together to cause an apparatus, such as a mobile phone or server, to perform various functions); and (c) hardware circuit(s) and/or processor(s), such as microprocessor(s) or a portion of a microprocessor(s), that requires software (e.g., firmware) for operation, but the software may not be present when it is not needed for operation. For example, the circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

While the various example embodiments of the present disclosure are discussed in connection with the 5G wireless communication standard for the sake of clarity and convenience, the example embodiments are not limited thereto, and one of ordinary skill in the art would recognize the example embodiments may be applicable to other wireless communication standards, such as the 4G standard, a Wi-Fi standard, a future 6G standard, a future 7G standard, etc.

Various example embodiments are directed towards an authentication procedure protocol for ambient IoT devices, e.g., ambient UE devices, ambient tag devices, ambient radio devices, passive IoT devices, passive UE devices, passive tag devices, passive radio devices, B-IoT devices, B-IoT tag devices, B-IoT radio devices, semi-passive IoT devices, semi-passive UE devices, semi-passive tag devices, semi-passive radio devices, EH passive radio devices, EH IoT devices, EH semi-passive IoT devices, EH semi-passive radio devices, EH radio devices with reduced and/or limited energy storage capability, EH IoT devices with reduced and/or limited energy storage capability, etc. Hereinafter, passive devices (e.g., devices without onboard energy storage capabilities) and semi-passive devices (e.g., devices with onboard energy storage capabilities) will be collectively referred to as being passive devices and it will be understood that the various example embodiments discussed herein apply equally to passive devices, semi-passive devices, and/or active devices with limited or reduced energy storage capabilities.

Because IoT devices have limited or no energy storage capabilities and rely on ambient energy sources from which to harvest energy, IoT devices are required to have low or ultra-low power consumption, low or ultra-low complexity, and/or low or ultra-low amount of hardware resources (e.g., processing resources, memory resources, etc.). While the existing 5G NR protocol provides a robust security system through the use of many different security, authentication, and/or encryption algorithms to provide secure authentication and confidential/privacy for active UE devices, these existing security procedures may not (and/or cannot) be provided to IoT devices due to the energy consumption requirements and/or hardware requirements of the security procedures which may strain and/or exceed the capabilities of the IoT devices. Moreover, because the IoT devices may communicate with activator nodes and/or reader nodes over distances from approximately 1m to approximately 500m, there is an increased opportunity and/or ability for unauthorized entities (e.g., attacker devices, eavesdropping devices, etc.) to attempt to clone and/or eavesdrop on the communications between the wireless network and the IoT device. For example, attackers may attempt to exploit holes in existing IoT device authentication procedures by conducting "tag cloning" attacks, wherein the attacker attempts to send data (e.g., malicious data, etc.) to a wireless network by using the identifier (e.g., tag identifier or tag ID) of an existing, authorized tag device. Additionally, attackers may attempt to exploit holes in existing IoT device confidentiality/privacy procedures by attempting to eavesdrop on the emission of data from an IoT device.

Accordingly, new procedures are desired to improve the authentication security and/or communication confidentiality and/or privacy for IoT devices, including for example, improving and/or guaranteeing authentication of an IoT device's identity prior to receiving the IoT device's data transmission, etc.

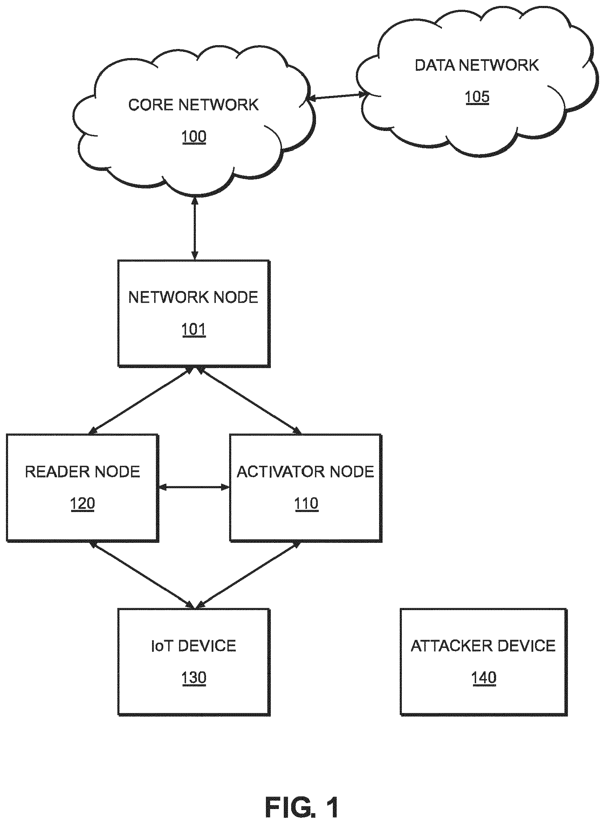

FIG. 1 illustrates a wireless communication system according to at least one example embodiment. As shown in FIG. 1, a wireless communication system includes a core network 100, a Data Network 105, a network node 101 of the core network 100, an activator node 110, a reader node 120, etc., but the example embodiments are not limited thereto. According to some example embodiments, the activator node 110 may also be a reader node 120 and/or the activator node 110 may be co-located with a reader node 120, etc. Additionally, the wireless communication systems may include a plurality of IoT devices (e.g., ambient IoT devices, ambient radio devices, ambient tag devices, passive IoT devices and/or semi-passive IoT devices, passive tag devices, tag devices, passive radio devices, semi-passive radio devices, etc.), e.g., IoT device 130, etc., and/or one or more attacker devices operated by an unauthorized and/or unpermitted entity, an attacking entity, etc., such as attacker device 140, etc. However, the example embodiments are not limited thereto, and the example embodiments may include a greater or lesser number of constituent elements, such as two or more activator nodes, two or more reader node, two or more IoT devices, one or more active IoT devices, one or more active UE devices, additional base stations, servers, routers, access points, gateways, etc.

The activator node 110, the reader node 120, etc., and/or the IoT device 130, etc., may be connected over a wireless network, such as a cellular wireless access network (e.g., a 3G wireless access network, a 4G-Long Term Evolution (LTE) network, a 5G-New Radio (e.g., 5G) wireless network, a 6G wireless network, a WiFi network, etc.). The wireless network may include a core network 100 and/or a Data Network 105. The at least one network node 101, activator node 110 and/or the reader node 120 may be implemented as radio access network (RAN) node(s) and/or connect to RAN node(s)(not shown), as well as to the core network 100 and/or the Data Network 105, over a wired and/or wireless network. The core network 100 and the Data Network 105 may connect to each other over a wired and/or wireless network. The Data Network 105 may refer to the Internet, an intranet, a wide area network, etc.

According to at least one example embodiment, the activator node 110 may transmit (and/or broadcast) an activation signal to wake up the IoT device 130, etc. The IoT device 130 may be configured to listen for, monitor for, or otherwise receive the activation signal, modulate the activation signal, and emit (and/or transmit, reflect, backscatter, etc.) a responsive signal, etc. The responsive signal emitted by the IoT device 130 may include an assigned tag identifier (e.g., tag ID) associated with the IoT device 130 and data generated and/or collected, etc., by the IoT device 130 and/or a sensor connected to the IoT device 130, etc. The reader node 120 may be configured to listen for the responsive signal from the IoT device 130, read the data payload of the responsive signal, and may forward the data payload to the core network 100, etc. Additionally, according to some example embodiments, when two or more reader nodes are assigned to the IoT device 130, the two or more reader nodes may localize and/or triangulate the position (e.g., location, current location, current position, etc.) of the IoT device 130, etc.

The activator node 110 and/or the reader node 120 may be any one of, but not limited to, a RAN node, an active UE device, a transmission and reception point (TRP), a stationary wireless reader device, a mobile wireless reader device, a tag reader node, an access point, a router, a microcell, a picocell, and/or any other active wireless network node capable of attaching to the core network 100. For example, in some example embodiments, the activator node and/or reader node may be a mobile phone, a smartphone, a tablet, a desktop computer, a laptop computer, a server, a wearable device, an active Internet of Things (IoT) device, a base station, and/or any other type of stationary or portable device capable of operating according to, for example, the 5G NR communication standard, and/or other wireless communication standard(s). The activator node 110 and/or the reader node 120 may be configurable to transmit and/or receive data in accordance with strict latency, reliability, and/or accuracy requirements, such as DRX communications, URLLC communications, TSC communications, etc., but the example embodiments are not limited thereto. Additionally, the activator node 110 and the reader node 120 may establish a secure link (SL) to communicate with each other.

According to at least one example embodiment, the IoT device 130, etc., may be an energy harvesting passive IoT device, an energy harvesting passive UE device (and/or EH reduced capability (REDCAP) UE device, etc.), etc., and may be configured to harvest energy using EH circuitry (e.g., EH devices, EH apparatuses, and/or EH means, etc.), such as solar cells/panels, wind turbines, water turbines, heat pumps, geothermal heat pumps, kinetic energy harvesting devices and/or vibration harvesting devices, ambient radio frequency (RF) harvesting devices (e.g., back-scattering circuitry configured to energy harvest RF signals transmitted by non-3GPP RF sources and/or non-desired RAT RF sources, such as RF signals transmitted by television broadcast towers, radio broadcast towers, WiFi base stations, etc.), but the example embodiments are not limited thereto. More particularly, according to some example embodiments, the IoT device may harvest energy from a signal (e.g., activation signal) transmitted by the activator node 110 and transmit a reflective and/or responsive signal to the reader node 120.

According to some example embodiments, the IoT device 130 may be a wireless tag, a sensor (e.g., thermometers, humidity sensors, pressure sensors, motion sensors, accelerometers, flood sensors, seismic sensors, etc.), monitoring/tracking sensors (e.g., machine status, parking meter data, vending machine inventory, etc.), utility meters, static and/or mobile asset tracking devices (e.g., for use in industrial and/or warehouse environments, etc.) medical devices, actuators, robotic devices, robotics, drones, connected medical devices, eHealth devices, smart city related devices, smart grid devices, security cameras, autonomous devices (e.g., autonomous unmanned aerial vehicles, etc.), etc., but the example embodiments are not limited thereto.

According to at least one example embodiment, the IoT device 130, etc., may harvest (e.g., obtain, collect, etc.) energy from the at least one EH harvesting circuitry included in, connected to, and/or attached to the IoT device, and the IoT device 130, etc., may store the harvested energy in at least one energy storage device (e.g., a battery, a capacitor, etc.) included in, connected to, and/or associated with the IoT device 130, etc., but the example embodiments are not limited thereto. Additionally, according to some example embodiments, the IoT device 130, etc., may omit the energy storage device, and may be powered directly by the energy collected by the EH harvesting device, etc.

The core network 100 may include at least one network node 101 (e.g., a network element, etc.), which may be implemented as a RAN node (e.g., a base station, a wireless access point, etc.) and/or provide core network functions (e.g., a location management function (LMF), an access and mobility management function (AMF), a session management function (SMF), a policy control function (PCF), a unified data management (UDM), a user plane function (UPF), an authentication server function (AUSF), an application function (AF), a network slice selection function (NSSF), etc.), but is not limited thereto. The network node 101 of the core network 100 may operate according to an underlying cellular and/or wireless radio access technology (RAT), such as 5G NR, LTE, Wi-Fi, etc. For example, the RAN node may be a 5G gNB node, an LTE eNB node, or an LTE ng-eNB node, etc., but the example embodiments are not limited thereto. The network node 101 of the core network 100 may provide wireless network services to one or more IoT devices, activator nodes, reader nodes, and/or other UE devices within one or more cells (e.g., cell service areas, broadcast areas, serving areas, coverage areas, etc.) surrounding the respective physical location of the network node 101, etc. Further, one or more of the activator node 110 and the reader node 120 may be a RAN node as well. Additionally, the network node 101 may provide one or more cells, etc.

In FIG. 1, it is assumed that the activator node 110 and reader node 120 are located within the cell service area of the network node 101 of the core network 100, and may connect to, receive broadcast messages from, receive paging messages from, receive/transmit signaling messages from/to, and/or access the wireless network through, etc., the network node 101 of the core network 100, but the example embodiments are not limited thereto.

Additionally, the network node 101 of the core network 100 may be configured to operate in a multi-user (MU) multiple input multiple out (MIMO) mode and/or a massive MIMO (mMIMO) mode, wherein the network node 101 of the core network 100 transmits a plurality of beams (e.g., radio channels, datastreams, streams, etc.) in different spatial domains and/or frequency domains using a plurality of antennas (e.g., antenna panels, antenna elements, an antenna array, etc.) and beamforming and/or beamsteering techniques.

The network node 101 of the core network 100 may be connected to at least one additional core network node (not shown) residing on the core network 100, such as a core network device, a core network server, access points, switches, routers, nodes, etc., but the example embodiments are not limited thereto. The core network 100 may provide network functions, such as a LMF, an AMF, a SMF, a PCF, a UDM, a UPF, an AUSF, an AF, a NSSF, etc., and/or equivalent functions, but the example embodiments are not limited thereto.

While certain components of a wireless communication network are shown as part of the wireless communication system of FIG. 1, the example embodiments are not limited thereto, and the wireless communication network may include components other than that shown in FIG. 1, which are desired, necessary, and/or beneficial for operation of the underlying networks within the wireless communication system, such as access points, switches, routers, nodes, servers, gateways, etc.

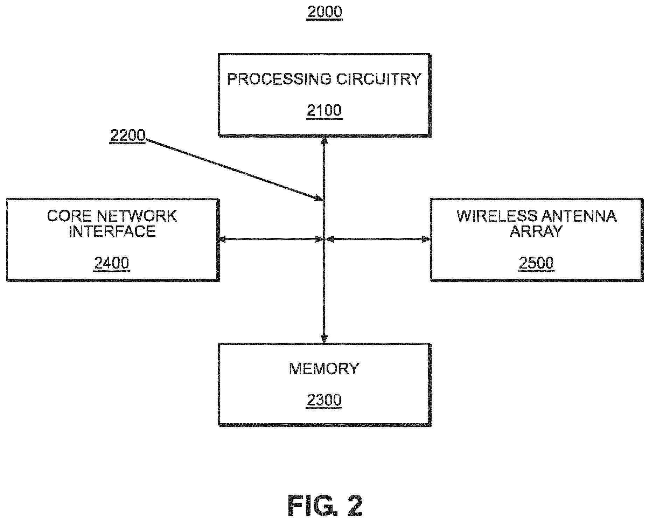

FIG. 2 illustrates a block diagram of an example network element, an example activator node, and/or an example reader node according to at least one example embodiment. The network node of FIG. 2 may correspond to the network node 101, the activator node 110, and/or the reader node 120 discussed and/or illustrated in FIG. 1, but the example embodiments are not limited thereto.

Referring to FIG. 2, a network node 2000 may include processing circuitry, such as processing circuitry 2100, at least one communication bus 2200, a memory 2300, at least one core network interface 2400, and/or at least one wireless antenna array 2500, etc., but the example embodiments are not limited thereto. For example, the core network interface 2400 and the wireless antenna array 2500 may be combined into a single network interface, etc., or the node 2000 may include a plurality of wireless antenna arrays, a plurality of core network interfaces, etc., and/or any combinations thereof. The memory 2300 may include various special purpose program code including computer executable instructions which may cause the node 2000 to perform the one or more of the methods of the example embodiments.

In at least one example embodiment, the processing circuitry 2100 may include at least one processor (and/or processor cores, distributed processors, networked processors, etc.), which may be configured to control one or more elements of the node 2000, and thereby cause the node 2000 to perform various operations. The processing circuitry 2100 is configured to execute processes by retrieving program code (e.g., computer readable instructions) and data from the memory 2300 to process them, thereby executing special purpose control and functions of the entire node 2000. Once the special purpose program instructions are loaded into the processing circuitry 2100, the processing circuitry 2100 executes the special purpose program instructions, thereby transforming the processing circuitry 2100 into a special purpose processor.

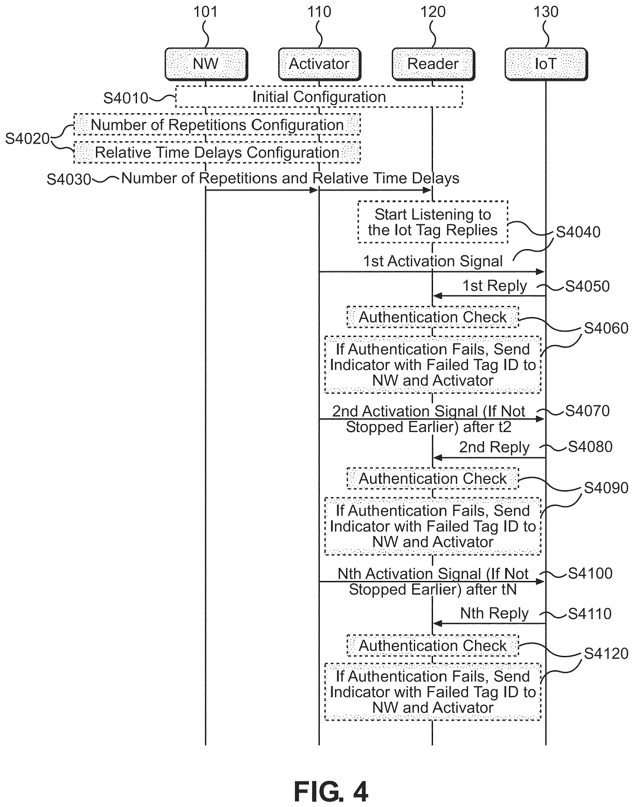

In at least one example embodiment, the memory 2300 may be a non-transitory computer-readable storage medium and may include a random access memory (RAM), a read only memory (ROM), and/or a permanent mass storage device such as a disk drive, or a solid state drive. Stored in the memory 2300 is program code (i.e., computer readable instructions) related to operating the node 2000, such as the methods discussed in connection with FIGS. 4 to 6, the at least one core network interface 2400, and/or at least one wireless antenna array 2500, etc. Such software elements may be loaded from a non-transitory computer-readable storage medium independent of the memory 2300, using a drive mechanism (not shown) connected to the node 2000, or via the at least one core network interface 2400, and/or at least one wireless antenna array 2500, etc.

In at least one example embodiment, the communication bus 2200 may enable communication and data transmission to be performed between elements of the node 2000. The bus 2200 may be implemented using a high-speed serial bus, a parallel bus, and/or any other appropriate communication technology. According to at least one example embodiment, the node 2000 may include a plurality of communication buses (not shown), such as an address bus, a data bus, etc.

When the network node 2000 operates as a RAN node, for example, a 4G RAN node, a 5G RAN node, etc., the node 2000 may be configured to schedule time domain resource allocations (TDRAs), e.g., orthogonal frequency division multiplexing (OFDM) symbols, physical resource blocks (PRBs), resource elements, etc., for active and/or passive UE devices and/or other nodes (e.g., reader nodes, etc.) connected to the node 2000, but the example embodiments are not limited thereto.

For example, the node 2000 may allocate time-frequency resources of a carrier (e.g., resource blocks with time and frequency dimensions) based on operation on the time domain (e.g., time division duplexing) and/or the frequency domain (e.g., frequency division duplexing). In the time domain context, the node 2000 will allocate a carrier (or subbands of the carrier) to one or more UEs (e.g., active UE devices, etc.) and/or other nodes (e.g., reader node 120 activator node 110, etc.) connected to the node 2000 during designated upload (e.g., uplink (UL)) time periods and designated download (e.g., downlink (DL)) time periods, or during designated special (S) time periods which may be used for UL and/or DL, but the example embodiments are not limited thereto.

When there are multiple UEs and/or other network nodes connected to the network node 2000, the carrier is shared in time such that each UE and/or other node is scheduled by the node 2000, and the node 2000 allocates each UE and/or other node with their own uplink time and/or downlink time. In the frequency domain context and/or when performing spatial domain multiplexing of UEs and/or other nodes (e.g., MU MIMO, etc.), the node 2000 will allocate separate frequency subbands of the carrier to UEs and/or other nodes simultaneously served by the node 2000, for uplink and/or downlink transmissions. Data transmission between the UE and/or other nodes with the node 2000 may occur on a radio frame basis in both the time domain and frequency domain contexts. The minimum resource unit for allocation and/or assignment by the node 2000 to a particular UE device and/or particular other node corresponds to a specific downlink/uplink time interval (e.g., one OFDM symbol, one slot, one minislot, one subframe, etc.) and/or a specific downlink/uplink resource block (e.g., twelve adjacent subcarriers, a frequency subband, etc.).

For the sake of clarity and consistency, the example embodiments will be described as using the time domain, but the example embodiments are not limited thereto.

Additionally, the network node 2000 may transmit scheduling information via physical downlink common channel (PDCCH) information to the one or more UE devices and/or other nodes located within the cell servicing area of the node 2000, which may configure the one or more UE devices and/or other nodes to transmit (e.g., UL transmissions via physical uplink control channel (PUCCH) information and/or physical uplink shared channel information (PUSCH), etc.) and/or receive (e.g., DL transmissions via PDCCH and/or physical downlink shared channel information (PDSCH), etc.) data packets to and/or from the node 2000. For example, the activator node 110 and/or reader node 120 may monitor the PDCCH during an ON period of a configured duty cycle (e.g., default duty cycle, network configured duty cycle, etc.), etc., but the example embodiments are not limited thereto. Additionally, the node 2000 may transmit control messages to the UE device and/or other network nodes using downlink control information (DCI) messages via physical (PHY) layer signaling, medium access control (MAC) layer control element (CE) signaling, radio resource control (RRC) signaling, etc., but the example embodiments are not limited thereto. Further, the node 2000 may transmit random access configuration information to allow the activator node 110, reader node 120, etc., to request an uplink allocation from the node 2000, etc. According to at least one example embodiment, the random access configuration information may be physical random access channel (PRACH) configuration, but the example embodiments are not limited thereto.

According to some example embodiments, when the network node 2000 operates as a reader node, e.g., reader node 120, the node 2000 may act as a relay node and/or intermediary node (e.g., an integrated access and backhaul (IAB) node) between the IoT device 130, etc., and the core network 100, etc. According to some example embodiments, the network node 2000 may be located in a location proximate to one or more IoT devices and may receive data transmitted by the IoT devices and forward and/or relay the data to the core network 100, etc., but the example embodiments are not limited thereto. In other words, the core network 100 may associate and/or assign the node 2000 with at least one IoT device based on a determined and/or calculated distance between the node 2000 and the at least one IoT device (e.g., the node 2000 may be the closest reader node to the IoT device 130 out of the plurality of reader nodes, UE devices, and RAN nodes, etc., of the wireless network), but the example embodiments are not limited thereto. For example, the network node 2000 may be located in a desired geographical area associated with one or more IoT devices and may be assigned by (and/or associated by) the core network 100 to receive the data from the IoT device 130, etc., located within the boundaries and/or associated with the desired geographical area, etc., but the example embodiments are not limited thereto. As another example, the core network 100 may receive location information related to the network node 2000, e.g., from a location sensor, such as GPS receiver, etc., approximate location information, such as angle of arrival (AOA) measurements, observed time difference of arrival (OTDOA), uplink time difference of arrival (UL-TDOA), round trip time (RTT), etc. Moreover, according to some example embodiments, particularly with regards to static RAN nodes and/or static reader nodes, the location of each of the RAN nodes and/or reader nodes may be known to the core network 100 and/or may be stored in a location database indexed based on an identifier associated with each of the RAN nodes, UE devices, and/or reader nodes, etc.

Additionally, according to some example embodiments, when the node 2000 is a reader node and/or an activator node, the node 2000 may be a stationary network node, such as a secondary RAN node, a TRP, a base station, an access point, etc., connected to the wireless network. Further, according to some example embodiments, the node 2000 may be a mobile network node, such as a UE device capable of operating on the RAT, such as a smartphone, a vehicle, an aerial vehicle, a UAV, etc., but the example embodiments are not limited thereto.

When the network node 2000 is operating as a RAN node, an activator node, and/or a reader node, the node 2000 may also include at least one core network interface 2400, and/or at least one wireless antenna array 2500, etc.

The at least one wireless antenna array 2500 may include an associated array of radio units (not shown) and may be used to transmit the wireless signals in accordance with a radio access technology, such as 4G LTE wireless signals, 5G NR wireless signals, etc., to at least one IoT device, e.g., IoT device 130, etc., at least one active IoT device (not shown), at least one active UE device (not shown), etc. According to some example embodiments, the wireless antenna array 2500 may be a single antenna, or may be a plurality of antennas, etc. For example, the wireless antenna array 2500 may be configured as a grid of beams (GoB) which transmits a plurality of beams in different directions, angles, frequencies, and/or with different delays, etc., but the example embodiments are not limited thereto.

The node 2000 may communicate with a core network (e.g., backend network, backhaul network, backbone network, Data Network, etc.) of the wireless communication network via a core network interface 2400. The core network interface 2400 may be a wired and/or wireless network interface and may enable the node 2000 to communicate and/or transmit data to and from to network devices on the backend network, such as a core network gateway (not shown), a Data Network (e.g., Data Network 105), such as the Internet, intranets, wide area networks, telephone networks, VoIP networks, etc.

While FIG. 2 depicts an example embodiment of a network node 2000, the network element, activator node, and/or reader node are not limited thereto, and may include additional and/or alternative architectures that may be suitable for the purposes demonstrated. For example, the functionality of the network node 2000 may be divided among a plurality of physical, logical, and/or virtual network elements, such as a centralized unit (CU), a distributed unit (DU), a remote radio head (RRH), and/or a remote radio unit (RRU), etc. Additionally, the network node 2000 may operate in standalone (SA) mode and/or non-standalone (NSA) mode using interfaces (not shown) such as X2, Xn, etc., between the network node 2000 and other RAN nodes, activator nodes, and/or reader nodes of the wireless network, interfaces such as S1, NG, etc., between the network node 2000 and the core network (e.g., core network 100), interfaces between network functions of the node 2000 operating in a distributed and/or virtual RAN mode (not shown), such as F1, E1, etc., and/or interfaces between the physical layer (e.g., a baseband unit, etc.) and the radio layer (e.g., a RRH, core network interface 2400, etc.) (not shown), such as CPRI, eCPRI, etc., but the example embodiments are not limited thereto.

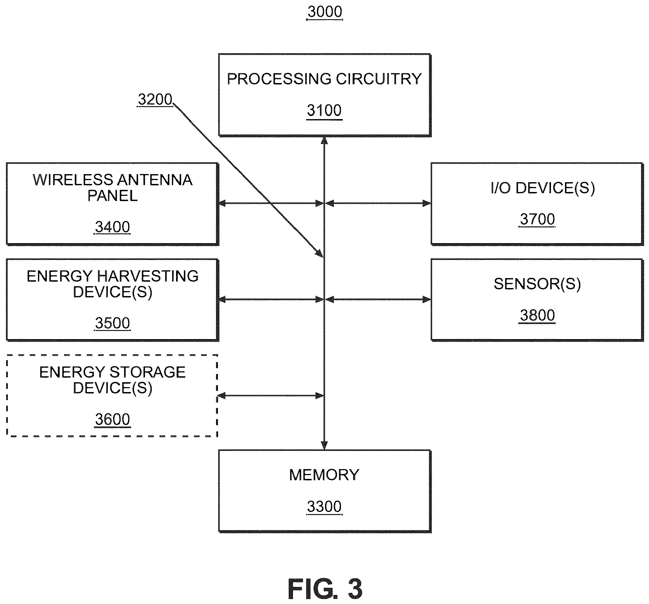

FIG. 3 illustrates a block diagram of an example IoT device according to at least one example embodiment. The example IoT device 3000 of FIG. 3 may correspond to the IoT device 130 of FIG. 1, but the example embodiments are not limited thereto, and the IoT device of the example embodiments may employ alternative architectures, etc.

Referring to FIG. 3, an IoT device 3000 (which may also be referred to as an ambient, passive, or semi-passive tag device; an ambient, semi-passive, or passive IoT device; an ambient, passive, or semi-passive radio device; etc.) may include processing circuitry 3100, such as at least one processor, at least one communication bus 3200, a memory 3300, at least one wireless antenna and/or wireless antenna panel 3400, at least one input/output (I/O) device 3700 (e.g., a microphone, a camera, a speaker, etc.), and/or at least one sensor 3800 (e.g., a motion sensor, a thermal sensor, a seismic sensor, etc.), but the example embodiments are not limited thereto. According to some example embodiments, the IoT device 3000 may include a greater or lesser number of constituent components, and for example, the IoT device 3000 may also include at least one energy harvesting circuitry and/or device 3500, such as radio frequency (RF) harvesting circuitry (e.g., back-scattering circuitry, etc.), one or more solar cells/panels, wind turbines, water turbines, heat pumps, geothermal heat pumps, kinetic energy harvesting devices and/or vibration harvesting devices, etc., and/or at least one energy storage device 3600 (e.g., a battery, a capacitor, etc.), but the example embodiments are not limited thereto. For example, in at least one example embodiment, the energy storage device 3600 may be omitted, and the energy collected by the energy harvesting circuitry 3500 may be used to directly power the IoT device 3000, etc.

According to some example embodiments, the IoT device 3000 may include at least one RF harvesting circuitry capable of collecting energy from ambient RF signals, e.g., RF signals transmitted from sources which do not use the same RAT as the IoT device 3000 and/or RF signals transmitted on a different channel than a RF channel the passive tag is configured to listen to the activation signal on, etc., but the example embodiments are not limited thereto. According to at least one example embodiment, assuming that the IoT device 3000 is configured to operate according to the SGNR standard, the IoT device 3000 may collect energy from ambient RF signals from television broadcast towers, radio broadcast towers, satellites, WiFi access points, Bluetooth access points, etc., but the example embodiments are not limited thereto. Additionally, the IoT device 3000 may further include one or more proximity sensors 3800, such as one or more proximity sensors (e.g., an infra-red proximity sensor, a capacitive proximity sensor, etc.), one or more location sensors (e.g., GPS, GLONASS, Beidou, Galileo, etc.), other sensors (e.g., thermometers, humidity sensors, pressure sensors, motion sensors, accelerometers, etc.), actuators, a single wireless antenna and/or a single wireless antenna panel, etc. Additionally, the sensor 3800, and/or I/O device 3700, etc., of the IoT device 3000 may be optional.

In at least one example embodiment, the processing circuitry 3100 may include at least one processor (and/or processor cores, distributed processors, networked processors, etc.), which may be configured to control one or more elements of the IoT device 3000, and thereby cause the IoT device 3000 to perform various operations. The processing circuitry 3100 is configured to execute processes by retrieving program code (e.g., computer readable instructions) and data from the memory 3300 to process them, thereby executing special purpose control and functions of the entire IoT device 3000. Once the special purpose program instructions are loaded into the processing circuitry 3100 (e.g., the at least one processor, etc.), the processing circuitry 3100 executes the special purpose program instructions, thereby transforming the processing circuitry 3100 into a special purpose processor.

In at least one example embodiment, the memory 3300 may be a non-transitory computer-readable storage medium and may include a random access memory (RAM), a read only memory (ROM), and/or a permanent mass storage device such as a disk drive, or a solid state drive. Stored in the memory 3300 is program code (i.e., computer readable instructions) related to operation of the IoT device 3000, such as the methods discussed in connection with FIGS. 4 to 6, etc. Such software elements may be loaded from a non-transitory computer-readable storage medium independent of the memory 3300, using a drive mechanism (not shown) connected to the IoT device 3000, or via the wireless antenna 3400, etc. Additionally, the memory 3300 may store network configuration information, such as system information, resource block scheduling, etc., for communicating with at least one RAN node associated with the core network 100, at least one activator node, e.g., activator node 110, and/or at least one reader node, e.g., reader node 120, accessing a wireless network, etc., but the example embodiments are not limited thereto. According to some example embodiments, the memory 3300 may also store attachment information (e.g., dedicated physical random access channel (PRACH) configuration information, additional network configuration information, IoT device attachment information, etc.), such as network information associated with and/or corresponding to at least one assigned reader node (e.g., an identifier associated with the reader node, etc.), a configured (e.g., set, desired, and/or required, etc.) timer associated with the assigned reader node, a pseudo-random number generator, etc., but the example embodiments are not limited thereto.

In at least one example embodiment, the at least one communication bus 3200 may enable communication and data transmission/reception to be performed between elements of the IoT device 3000, and/or monitor the status of the elements of the IoT device 3000 (e.g., monitor the current energy storage level of the energy storage device 3600, monitor the current amount of energy being collected, monitor whether the energy harvesting device 3500 is currently active (e.g., harvesting and/or collecting energy) or currently inactive (e.g., not collecting energy), etc. The bus 3200 may be implemented using a high-speed serial bus, a parallel bus, and/or any other appropriate communication technology. According to at least one example embodiment, the IoT device 3000 may include a plurality of communication buses (not shown), such as an address bus, a data bus, etc.

The IoT device 3000 may also include at least one wireless antenna panel 3400, but is not limited thereto. The at least one wireless antenna panel 3400 may include at least one associated radio unit (not shown) and may be used to transmit wireless signals in accordance with at least one desired radio access technology, such as 4G LTE, 5G NR, Wi-Fi, etc. Additionally, the at least one wireless antenna panel 3400 may be configured to transmit and/or receive data communications, etc., but the example embodiments are not limited thereto. The at least one wireless antenna panel 3400 may be located at the same or different physical locations on the body of the IoT device 3000, may have the same or different orientations, may operate in the same or different frequency ranges, may operate in accordance with the same or different radio access technology, etc. According to some example embodiments, the at least one wireless antenna panel 3400 may be a single antenna, or may be a plurality of antennas, etc. Additionally, the at least one wireless antenna panel 3400 may be used to collect energy from ambient RF signals, etc.

While FIG. 3 depicts an example embodiment of a IoT device 3000, the IoT device is not limited thereto, and may include additional and/or alternative architectures that may be suitable for the purposes demonstrated.

FIG. 4 is an example transmission flow diagram illustrating a first authentication process according to at least one example embodiment according to at least one example embodiment, but the example embodiments are not limited thereto.

As shown in FIG. 4, according to at least one example embodiment, a wireless network may include at least one network node (NW) 101, e.g., a RAN node of the core network 100 of FIG. 1, at least one activator node, e.g., activator node 110 of FIG. 1, at least one IoT device, e.g., IoT device 130 of FIG. 1, at least one reader node, e.g., reader node 120 of FIG. 1, etc., but the example embodiments are not limited thereto, and for example, the network node 101 may also be configured as the activator node 110 and/or the reader node 120, may be co-located with the activator node 110 and/or the reader node 120, etc. Additionally, there may be at least one unauthorized attacker device (e.g., tag cloning device, etc.), such as attacker device 140 within communication range of the IoT device 130, the reader node 120, and/or the activator node 110, etc., but the example embodiments are not limited thereto.

According to at least one example embodiment, in operation S4010, an IoT device activation/reading configuration process may occur. The configuration process may include a network node 101, e.g., a RAN node of the core network 100, receiving an initiation message from one or more network nodes, e.g., an initiator network node, an initiation network node, etc., indicating that at least one IoT device 130 may have data to transmit to the network. According to at least one example embodiment, the initiator network node may be any one of the network nodes 110, 120, etc., but is not limited thereto, and for example, may be a separate UE device attached to the core network 100, a RAN node of the core network, a location and management function (LMF) network element, and/or other network element, etc. The RAN node may then assign and/or associate one or more UE devices and/or RAN nodes, etc., to act as the activator node (e.g., activator node 110) and/or the reader node (e.g., reader node 120, etc.) to the one or more IoT devices 130. For example, the RAN node may make the determinations based on current location information associated with one or more of the UE devices and/or RAN nodes in relation to the known, triangulated, and/or expected location of the IoT device 130, the capabilities of the UE devices and/or RAN nodes (e.g., whether the UE device is full duplex or half duplex, etc.), a current status of the UE devices and/or RAN nodes (e.g., active state, sleep state, in motion, stationary, etc.), and/or current network conditions, etc., but the example embodiments are not limited thereto. For example, a UE device may be selected as an activator node when the UE device is determined and/or estimated to be within less than 10 meters of the IoT device, whereas a RAN node may be selected to be the activator node if it is within 10 to 50 meters away from the IoT device, etc., but the example embodiments are not limited thereto. As another example, the UE devices and/or RAN nodes may be selected based on a current power budget available to the UE device and/or RAN nodes, etc.

Additionally, according to some example embodiments, the network node 101 of the core network 100 may assign and/or associate one or more network nodes to the at least one IoT device 130 based on at least one measured signal quality metric between the respective network node and the IoT device 130, e.g., a signal interference to noise ratio (SINR), etc., but the example embodiments are not limited thereto. For example, the network node 101 of the core network 100 may assign the network node 110 to be the activator node and/or the network node 120, to be the reader nodes for the at least one IoT device 130 in response to the network nodes 110 and 120 having the highest SINR value out of a plurality of candidate network nodes, etc., but the example embodiments are not limited thereto, and for example, the network node 101 of the core network 100 may assign and/or associate the network nodes 110 and 120 to be the activator node and/or a reader node for the one or more IoT devices based on a combination of distance and signal quality, etc.

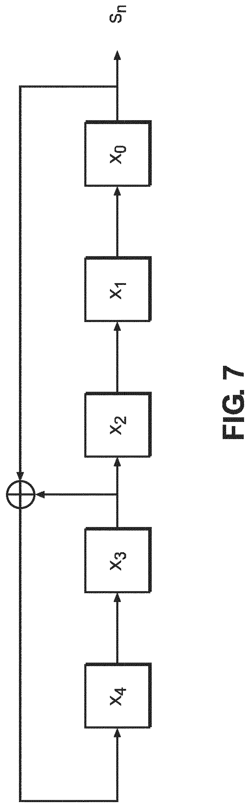

In operation S4020, according to at least one example embodiment, the network node 101 may determine an authentication configuration associated with the at least one IoT device 130, wherein the authentication configuration includes repetition information associated with the at least one IoT device 130, but the example embodiments are not limited thereto. According to at least one example embodiment, the repetition information may include at least one of a repetition number parameter (e.g., a secret repetition number parameter, etc.) and/or a repetition delay parameter (e.g., a secret repetition delay parameter, etc.), etc., for use in authenticating the at least one IoT device 130 and/or verifying the identity of the at least one IoT device 130, but is not limited thereto. More specifically, the network node 110 may determine a repetition number parameter which indicates the number of times that the activator node 110 will transmit and/or broadcast an activation signal to the at least one IoT device 130, and/or may determine a repetition delay parameter which indicates an expected relative time delay for the reader node 120 to receive a responsive signal (e.g., a reply signal) from the at least one IoT device 130 in response to the activation signal, but the example embodiments are not limited thereto. According to some example embodiments, the network node 101 may set a fixed number as the repetition number parameter and/or a fixed repetition delay parameter, but is not limited thereto. For example, the fixed repetition number parameter and/or the fixed repetition delay parameter may be a number/numbers which are pseudo-randomly generated by the network node 101, but the example embodiments are not limited thereto. In other example embodiments, the network node 101 may determine a "seed" number for use by both the activator node 110 and the reader node 120 to independently determine the same repetition number parameter and/or repetition delay parameter using a pseudo-random number generator, and the seed number may be included in the repetition information, but the example embodiments are not limited thereto. The generation of a pseudo-random number will be discussed in greater detail in connection with FIG. 7.

As shown in FIGS. 4 to 6, it is assumed that the repetition number parameter is $N$ (e.g., repetition number parameter = $N$, where $N$ is >= 1) and there are $N$ relative time delay period values (e.g., $t_N = t1, t2, ... , tN$) corresponding to each of the activation signal repetitions, but the example embodiments are not limited thereto. According to at least one example embodiment, the repetition delay parameters indicate a desired and/or expected time period within which the reader node 120 should receive a responsive signal from the IoT device 130 in response to the activation signal transmitted by the activator node 110 if the IoT device 130 is an authentic IoT device and not an attacker device. Accordingly, the repetition delay parameter may be represented as follows:

$$T(z,k,n) = t_{z,k,n} + D + d + dt \qquad \text{[Equation 1]}$$

Where $Z$ represents the repetition count; $k$ represents the IoT device; $D$ is the propagation delay between the activator node 110 and the IoT device 130; $d$ is the propagation delay between the IoT device 130 and the reader node 120; and $dt$ is the processing time at the IoT device 130.

The reader node 120 then estimates the differential times as follows:

$$dT(z) = T(z, k, n) - T(z - 1, k, n) \qquad \text{[Equation 2]}$$

for each detected repetition $z$ and records the total number of detected repetitions $Z$.

Further, according to some example embodiments, in the event that there is a plurality of IoT devices (e.g., $k$ to $k_x$) associated with the activator node 110 and/or the reader node 120, the network node 101 may determine separate repetition information associated with each IoT device $k$ of the plurality of IoT devices $k$ to $k_x$, subsets, e.g., $\{k_1, k_2\}$, etc., of the plurality of IoT devices $k$ to $k_x$, etc., but is not limited thereto. In other words, each IoT device $k$ may have separate repetition number parameters $N$ and/or separate repetition delay parameters $t$, but the example embodiments are not limited thereto.

In operation S4030, the network node 101 transmits the authentication configuration to the activator node 110 and the reader node 120, etc. For example, the authentication configuration includes repetition information which may include one of the repetition number parameter or the repetition delay parameter to the activator node 110 and the reader node 120, both the repetition number parameter and the repetition delay parameter to the activator node 110 and the reader node 120, and/or one or more seeds for generating the repetition number parameter and/or the repetition delay parameter to the activator node 110 and the reader node 120, etc. In at least one example embodiment, the network node 101 transmits the authentication configuration via a secure link to the activator node 110 and the reader node 120, in order to decrease and/or eliminate the possibility that the attacker device 140 receives the repetition number parameter and/or the repetition delay parameter and is then capable of cloning and/or mimicking the responsive signals of the authentic IoT device 130. For example, if the activator node 110 and/or the reader node 120 are UE devices, the network node 101 transmits the repetition number parameter and/or the repetition delay parameter via UL/DL, but the example embodiments are not limited thereto. Additionally, if the network node 101 is a LMF and the reader/activator nodes are RAN nodes, the authentication configuration may be transmitted over the NRPPa interface, or if the reader/activator nodes are UE devices, then the authentication configuration may be transmitted over the LPP interface. If the network node 101 is a RAN node and the reader/activator nodes are also RAN nodes, the authentication configuration may be transmitted over the Xn interface. Further, according to some example embodiments, the network node 101 may be a UE device, and the reader node 120 and/or the activator node 130 may also be UE devices. Accordingly, the network node 101 may transmit the authentication configuration to the reader node 120 and/or the activator node 130 using sidelink communication (e.g., NR sidelink, etc.) and/or any other device-to-device (D2D) communication, etc.

In operation S4040, the activator node 110 and the reader node 120 receive the authentication configuration. Additionally, in the event that a fixed repetition number parameter and/or a fixed repetition delay parameter are not determined by the network node 101, and instead one or more seed numbers have been transmitted, the activator 110 and the reader node 120 may generate a pseudo-random number using the received seed for use as the repetition number parameter and/or the repetition delay parameter, etc. Moreover, the activator node 110 may transmit a first activation signal of a plurality of activation signals (the plurality of activation signals set by the repetition number parameter) to the at least one IoT device 130 based on the authentication configuration and the reader node 120 may begin listening for responsive signal(s) from the at least one IoT device 130 at the expected relative time delay period based on the repetition number parameter and/or the repetition delay parameter, etc.

In operation S4050, if the at least one IoT device 130 is authentic, the at least one IoT device 130 may transmit, emit, backscatter, etc., a responsive signal (e.g., reply signal, etc.) to the first activation signal. The responsive signal may include an identifier corresponding to and/or associated with the at least one IoT device 130, and may further include data collected by (e.g., sensor data, etc.) and/or generated by the IoT device 130, but the example embodiments are not limited thereto. In operation S4060, the reader node 120 may perform an authentication check of the at least one IoT device 130 based on the responsive signal and the authentication configuration associated with the at least one IoT device 130, etc. More specifically, the reader node 120 may determine whether the correct number of responsive signals from the IoT device 130 were received in accordance with the repetition number parameter, and may determine whether the responsive signals from the IoT device 130 were received within the correct relative time delay period in accordance with the repetition delay parameter, etc. For example, if the reader node 120 determines that:

$$dT(z) \neq t_{z,k,n} - t_{z-1,k,n}, \text{ or if } Z \neq N_{k,n} \qquad \text{[Equation 3]}$$

where $t_{z,k,n}$ is configured by the network node 101 in operation S4020, then
the reader node 120 cannot authenticate the IoT device 130 and stops the authentication process by sending an authentication failure indicator and/or message to the network node 101 and/or the activator node 110 which may include an authentication status of the IoT device 130 (e.g., an indication indicating that the IoT device 130 failed the authentication and/or is unverified, etc.) and the identifier of the IoT device 130, but is not limited thereto. Additionally, in some example embodiments, the reader node 120 may transmit an authentication status indicator and/or authentication status message to the network node 101 and/or the activator node 110 after every authentication check, and not limited to only after a failed authentication check, etc. The activator node 110 then stops and/or disables the remaining transmissions of the activation signal to the IoT device 130 in response to the failed authentication check of the IoT device 130 (and/or the receipt of the authentication status of the IoT device 130 indicating that the IoT device 130 failed the authentication check, etc.), thereby increasing the spectral efficiency of the repetition-based authentication protocol.

In operation S4070, assuming that the first authentication check was completed successfully, e.g., the reader node 120 did not transmit an authentication failure message to the network node 101 and/or to the activator node 110, etc., the activator node 110 transmits the next activation signal to the IoT device 130, etc. In operation S4080, if the IoT device 130 is authentic, the IoT device 130 may transmit, emit, backscatter, etc., a second responsive signal (e.g., reply signal, etc.) of the plurality of responsive signals, in response to the second activation signal. In operation S4090, similar to operation S4060, the reader node 120 may receive the second responsive signal and may determine whether the second responsive signal complies with the authentication configuration, e.g., the repetition number parameter and/or the repetition delay parameter, etc., associated with the IoT device 130, etc.

In operation S4100, assuming that the reader node 120 determines that the IoT device 130 is authentic based on the second responsive signal, the activator node 110 transmits an Nth activation signal (e.g., third activation signal as shown in FIG. 4) to the IoT device 130, until the number of repetitions indicated by the repetition number parameter has been reached and/or an authentication failure indicator has been received from the reader node 120 and/or the network node 101. In the event that the activator node 110 receives the authentication failure indicator and/or message from the reader node 120 and/or the network node 101, and the activator node 110 stops, suspends and/or discontinues further transmission of the activation signal to the IoT device 130, etc. In operation S4110, the IoT device 130 transmits, emits, backscatters, the Nth responsive signal to the Nth activation signal. In operation S4120, similar to operations S4060 and S4090, the reader node 120 may receive the Nth responsive signal and may determine whether the Nth responsive signal complies with the authentication configuration, e.g., the repetition number parameter and/or the repetition delay parameter, etc., associated with the IoT device 130, etc. As shown in FIG. 4, because the repetition number parameter was set to three, the reader node 120 finally confirms that the IoT device 130 is authentic and transmits an authentication successful indicator and/or message to the network node 101 and/or the activator node 110, etc. Otherwise, the reader node 120 transmits the authentication failure indicator and/or message to the network node 101 and/or the activator node 110 with the identifier of the failed IoT device 130, etc.

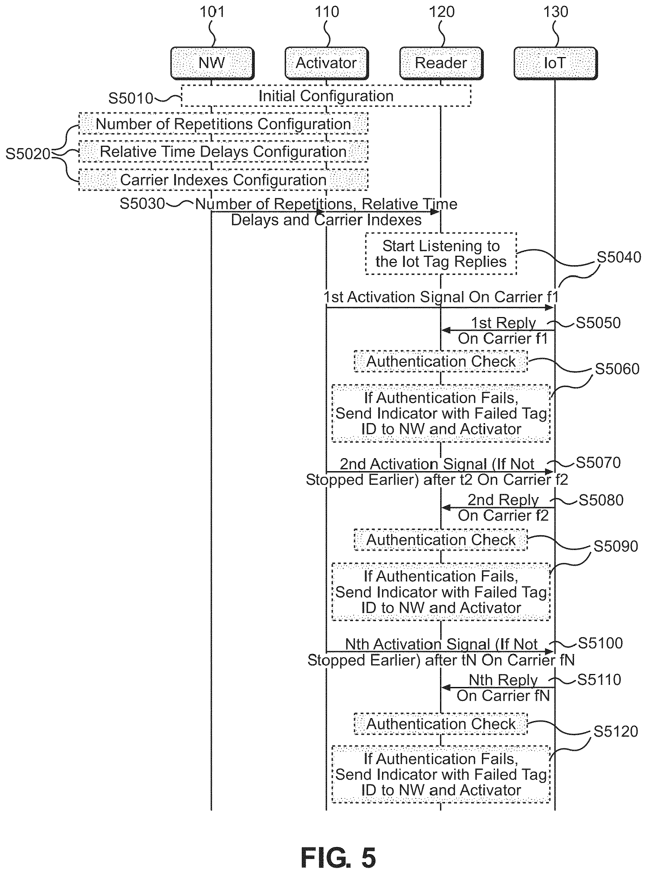

FIG. 5 is an example transmission flow diagram illustrating a second authentication process according to at least one example embodiment. In contrast to the wireless network illustrated in FIG. 4, the IoT device 130 is capable of operating on a plurality of frequency domain carriers, but the example embodiments are not limited thereto.

Referring now to FIG. 5, in operation S5010, similar to operation S4010 of FIG. 4, the IoT device activation/reading configuration process may be performed. As shown in FIG. 5, it is assumed that the network node 110 is configured as the activator node, and the network node 120 is configured as the reader node, but the example embodiments are not limited thereto.

In operation S5020, similar to operation S4020, the network node 101 of the core network 100 may determine the authentication configuration associated with the IoT device 130. However, in FIG. 5, the authentication configuration includes the repetition information associated with the at least one IoT device 130, e.g., a repetition number parameter, a repetition delay parameter, etc., and the authentication configuration may further include a carrier index configuration which includes a set of frequency domain carriers, a plurality of frequency domain carriers, etc., but the example embodiments are not limited thereto. According to at least one example embodiment, the set of carriers may be randomly selected, e.g., randomly by using a pseudo-random number generator, etc., but the example embodiments are not limited thereto, and for example, the set of carriers may be fixed. Further, according to some example embodiments, the authentication configuration may also include a seed associated with the set of carriers to be used by the activator node 110 and the reader node 120 to locally generate the same set of carriers, etc.

In operation S5030, similar to operation S4030, the network node 101 transmits the authentication configuration to the activator node 110 and the reader node 120, the authentication configuration including the repetition information (e.g., the repetition number parameter and/or the repetition delay parameter, etc.,) and/or the carrier index configuration, etc. In operation S5040, in contrast to operation S4040, the activator node 110 may transmit a first activation signal at a first carrier index of the set of carrier frequencies to the at least one IoT device 130 based on the authentication configuration and the reader node 120 may begin listening for responsive signal(s) from the at least one IoT device 130 at the expected relative time delay period and the expected carrier frequency based on the repetition number parameter and/or the repetition delay parameter, etc. In other words, the authentication repetition protocol of FIG. 5 further includes frequency hopping over a plurality of carriers, thereby increasing the difficulty of an attacker device 140 from cloning and/or mimicking the responsive signal of an authentic IoT device 130, etc.

In operation S5050, if the at least one IoT device 130 is authentic, the at least one IoT device 130 may transmit, emit, backscatter, etc., a responsive signal (e.g., reply signal, etc.) to the first activation signal on the first carrier index. The responsive signal may include an identifier corresponding to and/or associated with the at least one IoT device 130, and may further include data collected by (e.g., sensor data, etc.) and/or generated by the IoT device 130, but the example embodiments are not limited thereto. In operation S5060, similar to operation S4060, the reader node 120 may perform an authentication check of the at least one IoT device 130 based on the responsive signal and the authentication configuration associated with the at least one IoT device 130, etc. More specifically, the reader node 120 may determine whether the correct number of responsive signals from the IoT device 130 were received on the correct carrier frequency in accordance with the repetition number parameter and the carrier index, and may further determine whether the responsive signals from the IoT device 130 were received within the correct relative time delay period in accordance with the repetition delay parameter if the repetition delay parameter was set, etc. If the reader node 120 determines that the first responsive signal did not comply with any one of the repetition number parameter, the carrier index, and/or the repetition delay parameter, etc., the reader node 120 cannot authenticate the IoT device 130 and stops the authentication process by sending an authentication failure indicator and/or message to the network node 101 and/or to the activator node 110 with the identifier of the failed IoT device 130. The activator node 110 then stops and/or disables the remaining transmissions of the activation signal to the IoT device 130.

In operation S5070, similar to operation S4070, assuming that the first authentication check was completed successfully, the activator node 110 transmits the next activation signal to the IoT device 130 using the next (e.g., second) carrier index, etc. In operation S5080, similar to operation S4080, if the IoT device 130 is authentic, the IoT device 130 may transmit, emit, backscatter, etc., a second responsive signal (e.g., reply signal, etc.) to the second activation signal in accordance with the second carrier index, etc. In operation S5090, similar to operations S5060 and S4090, the reader node 120 may receive the second responsive signal and may determine whether the second responsive signal complies with the authentication configuration, e.g., the repetition number parameter, the carrier index, and/or the repetition delay parameter, etc., associated with the IoT device 130, etc.

In operation S5100, assuming that the reader node 120 determines that the IoT device 130 is authentic based on the second responsive signal, the activator node 110 continues to transmit activation signals to the IoT device 130 based on the corresponding carrier index until the number of repetitions indicated by the repetition number parameter has been reached and/or an authentication failure indicator has been received from the reader node 120 and/or the network node 101. For example, the activator node 110 may transmit the third activation signal to the IoT device 130 based on the third carrier index, etc. In the event that the activator node 110 receives the authentication failure indicator and/or message from the reader node 120 and/or the network node 101, the activator node 110 stops, suspends and/or discontinues further transmission of the activation signal to the IoT device 130, etc. In operation S5110, the IoT device 130 transmits, emits, backscatters, a third responsive signal to the third activation signal in accordance to the third carrier index, etc. In operation S5120, similar to operations S5060, S5090, and S4120, the reader node 120 may receive the third responsive signal and may determine whether the third responsive signal complies with the authentication configuration, e.g., the repetition number parameter, the third carrier index, and/or the repetition delay parameter, etc., associated with the IoT device 130, etc. As shown in FIG. 5, because the repetition number parameter was set to three, the reader node 120 finally confirms that the IoT device 130 is authentic and transmits an authentication successful indicator and/or message to the network node 101 and/or the activator node 110, etc. Otherwise, the reader node 120 transmits the authentication failure indicator and/or message to the network node 101 and/or the activator node 110 with the identifier of the failed IoT device 130, etc.

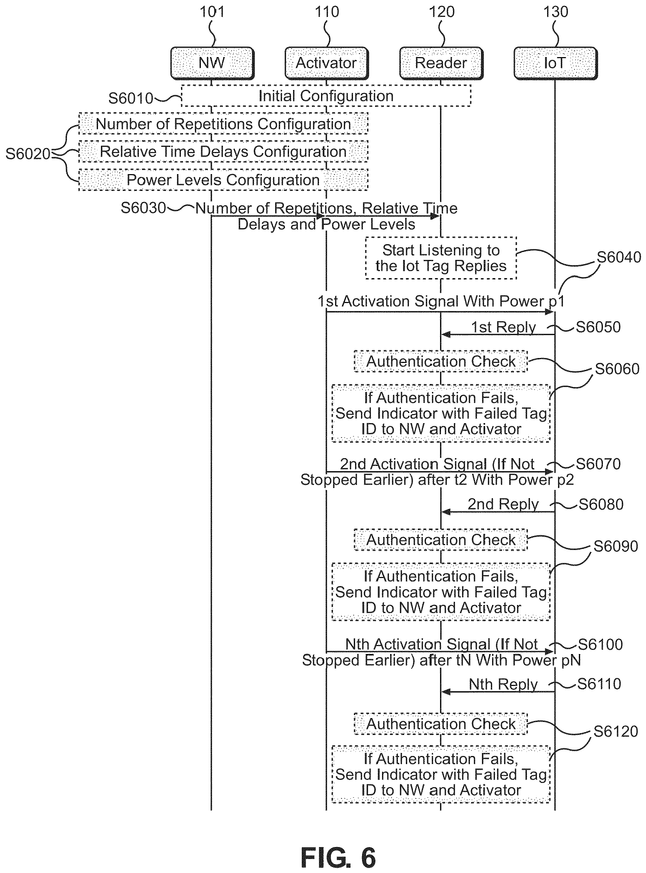

FIG. 6 is an example transmission flow diagram illustrating a third authentication process according to at least one example embodiment. In contrast to FIGS. 4 and 5, it is assumed that the activator node 110 may transmit the activation signal at a plurality of transmission power levels, and it is further assumed that the signal-to-noise ratio (SNR) remains constant or near-constant for each repetition of the activation signal transmissions.

Referring now to FIG. 6, in operation S6010, similar to operations S4010 of FIG. 4 and S5010 of FIG. 5, the IoT device 130 activation/reading configuration process may be performed by the network node 101 of core network 100.

In operation S6020, similar to operations S4020 and S5020, the network node 101 of the core network 100 may determine the authentication configuration associated with the IoT device 130. However, in FIG. 6, the authentication configuration includes the repetition information associated with the at least one IoT device 130, e.g., a repetition number parameter, a repetition delay parameter, etc., and the authentication configuration may also include a transmission power level configuration which includes a set of transmission power levels, a plurality of transmission power levels, etc., but the example embodiments are not limited thereto. As another example embodiment, the authentication configuration may further include the set of carrier indexes as discussed in connection with FIG. 5 above, but the example embodiments are not limited thereto. According to at least one example embodiment, the set of transmission power levels may be randomly selected, e.g., randomly selected using a pseudo-random number generator, etc., but the example embodiments are not limited thereto, and for example, the set of transmission power levels may be fixed. Further, according to some example embodiments, the authentication configuration may include a seed associated with the set of transmission power levels to be used by the activator node 110 and the reader node 120 to locally generate the same set of transmission power levels, etc.

In operation S6030, similar to operations S4030 and S5030, the network node 101 transmits the authentication configuration to the activator node 110 and the reader node 120, the authentication configuration including the repetition information (e.g., the repetition number parameter and/or the repetition delay parameter, etc.) and/or the transmission power configuration, etc. In operation S6040, in contrast to operations S4040 and S5040, the activator node 110 may transmit a first activation signal at a first transmission power level of the set of transmission power levels to the at least one IoT device 130 based on the authentication configuration and the reader node 120 may begin listening for responsive signal(s) from the at least one IoT device 130 at the expected relative time delay period and the expected transmission power level based on the repetition number parameter, the expected transmission power level, and/or the repetition delay parameter, etc. In other words, the authentication repetition protocol of FIG. 5 further includes transmission power hopping over a plurality of transmission power levels, thereby increasing the difficulty of an attacker device 140 from cloning and/or mimicking the responsive signal of an authentic IoT device, etc.

In operation S6050, similar to operations S4050 and S5050, if the at least one IoT device 130 is authentic, the at least one IoT device 130 may transmit, emit, backscatter, etc., a responsive signal (e.g., reply signal, etc.) to the first activation signal with the same and/or similar power level as the first activation signal. The responsive signal may include an identifier corresponding to and/or associated with the at least one IoT device 130, and may further include data collected by (e.g., sensor data, etc.) and/or generated by the IoT device 130, but the example embodiments are not limited thereto. In operation S6060, similar to operations S4060 and S5060, the reader node 120 may perform an authentication check of the at least one IoT device 130 based on the responsive signal and the authentication configuration associated with the at least one IoT device 130, etc. More specifically, the reader node 120 may determine whether the correct number of responsive signals from the IoT device 130 were received at the correct transmission power level in accordance with the repetition number parameter and the transmission power level parameter, and may further determine whether the responsive signals from the IoT device 130 were received within the correct relative time delay period in accordance with the repetition delay parameter, etc. If the reader node 120 determines that the first responsive signal did not comply with any one of the repetition number parameter, the transmission power level parameter, and/or the repetition delay parameter, etc., the reader node 120 cannot authenticate the IoT device 130 and stops the authentication process by sending an authentication failure indicator and/or message to the network node 101 and/or to the activator node 110 with the identifier of the failed IoT device 130. The activator node 110 then stops and/or disables the remaining transmissions of the activation signal to the IoT device 130.

In operation S6070, similar to operations S4070 and S5070, assuming that the first authentication check was completed successfully, the activator node 110 transmits the next activation signal to the IoT device 130 using the second transmission power level, etc. In operation S6080, similar to operations S4080 and S5080, if the IoT device 130 is authentic, the IoT device 130 may transmit, emit, backscatter, etc., a second responsive signal (e.g., reply signal, etc.) to the second activation signal in accordance with the second transmission power level, etc. In operation S6090, similar to operations S6060 and S5090, the reader node 120 may receive the second responsive signal and may determine whether the second responsive signal complies with the authentication configuration, e.g., the repetition number parameter, the transmission power level, and/or the repetition delay parameter, etc., associated with the IoT device 130, etc.

In operation S6100, similar to operations S4100 and S5100, assuming that the reader node 120 determines that the IoT device 130 is authentic based on the second responsive signal, the activator node 110 transmits the Nth (e.g., third, etc.) activation signal to the IoT device 130 based on the Nth (e.g., third, etc.) transmission power level, etc. Otherwise, the activator node 110 receives the authentication failure indicator and/or message from the reader node 120 and/or from the network node 101, and the activator node 110 stops, suspends and/or discontinues further transmission of the activation signal to the IoT device 130, etc. In operation S6110, the IoT device transmits, emits, backscatters, a third responsive signal to the third activation signal in accordance to the third carrier index, etc. In operation S6120, similar to operations S6060, S6090, and S5120, etc., the reader node 120 may receive the third responsive signal and may determine whether the third responsive signal complies with the authentication configuration, e.g., the repetition number parameter, the third transmission power level, and/or the repetition delay parameter, etc., associated with the IoT device 130, etc. As shown in FIG. 6, because the repetition number parameter was set to three, the reader node 120 finally confirms that the IoT device 130 is authentic and transmits an authentication successful indicator and/or message to the network node 101 and/or the activator node 110, etc. Otherwise, the reader node 120 transmits the authentication failure indicator and/or message to the network node 101 and/or the activator node 110 with the identifier of the failed IoT device 130, etc.

FIG. 7 illustrates an example pseudo-random number generator according to at least one example embodiment.

According to at least one example embodiment, the network node 101, activator node 110, and/or reader node 120 may use a pseudo-random number generator to generate at least one of the repetition number parameter, the repetition delay parameter, the set of carrier indexes, and/or the set of transmission power levels, etc., but the example embodiments are not limited thereto. As shown in FIG. 7, the pseudo-random number generator may be a maximum length sequence (MLS) pseudo-random number generator, but the example embodiments are not limited thereto, and other types of pseudo-random number generators may be used. For the sake of simplicity and clarity, FIG. 7 illustrates a MLS configured to generate a pseudo random sequence of $2^L - 1$ bits by using a shift register of length $L$, where $L =$

5, but the example embodiments are not limited thereto and, for example, other values for the length *L* may be used and/or other configurations of the MLS pseudo-random number generator may be used, etc. The MLS of FIG. 7 may generate a sequence of 31 bits (e.g., $2^5 - 1 = 31$), wherein the binary value of the secret seed number is input into the MLS as the initial binary value of the shift register (e.g., $X_4$ to $X_0$ as shown in FIG. 7), but the example embodiments are not limited thereto, and according to some example embodiments, using a length $L = 20$, a pseudo-random sequence of approximately 1 million bits (e.g., $2^{20} - 1$) may be generated, further improving the security of the example embodiments.

Additionally, as shown in FIG. 7, the value in the position $X_4$ may be shifted to the $X_3$ position, the value in the $X_3$ position may be shifted to the $X_2$ position, the value in the $X_2$ position may be shifted to the $X_1$ position, and the value of the $X_0$ position may be output as $S_n$. Additionally, a modulo-2 addition operation is performed on the output of the $X_3$ position and the output of the $X_0$ position and the result is shifted to the $X_4$ position. Accordingly, the shifting of the MLS pseudo-random number generator may be performed a desired and/or set number of times, e.g., $L$ times, etc., to generate a pseudo-random number. Moreover, because both the activator node 110 and the reader node 120 receive the same secret seed number from the network node 101, both the activator node 110 and the reader node 120 generate the same pseudo-random number, whereas an attacker device 140 cannot generate the same pseudo-random number without knowledge of the secret seed number. Consequently, the security of the example embodiments are further improved.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1.  An activator node, comprising:

    a memory storing computer readable instructions; and
    processing circuitry configured to execute the computer readable instructions to cause the activator node to,
    obtain an authentication configuration associated with at least one device, the authentication configuration including repetition information, the repetition information including at least one of a repetition number parameter and a repetition delay parameter; and
    transmit at least a first activation signal of a plurality of activation signals to the at least one device based on the repetition information, the first activation signal causing the at least one device to transmit a responsive signal to at least one reader node.

2.  The activator node of claim 1, wherein

    the repetition information includes the repetition number parameter, and the repetition number parameter includes a fixed number of repetitions for transmission of the activation signals to the at least one device; and
    the activator node is further caused to,
    determine whether to transmit at least one second activation signal of the plurality of activation signals to the at least one device based on an authentication status of the at least one device determined by the at least one reader node, and
    transmit the at least one second activation signal of the plurality of activation signals to the at least one device according to the fixed number of repetitions based on results of the determination.

3.  The activator node any one of claims 1 and 2, wherein

    the activator node is further caused to, receive the repetition information from a network node, the repetition information including the repetition number parameter, and the repetition number parameter including a pseudo-random number of repetitions for transmission of the activation signal to the at least one device;
    determine whether to transmit at least one second activation signal of the plurality of activation signals to the at least one device based on an authentication status of the at least one device determined by the at least one reader node; and
    transmit the at least one second activation signal of the plurality of activation signals to the at least one device according to the pseudo-random number of repetitions based on results of the determination.

4.  The activator node of any one of claims 1 to 3, wherein the activator node is further caused to,

receive the repetition information from a network node, the repetition information including the repetition number parameter, and the repetition number parameter including a seed for pseudo-randomly generating the number of repetitions for transmission of the activation signal to the at least one device;
determine a pseudo-random number of repetitions using the seed;
determine whether to transmit at least one second activation signal of the plurality of activation signals to the at least one device based on an authentication status of the at least one device determined by the at least one reader node; and
transmit the at least one second activation signal of the plurality of activation signals to the at least one device according to the pseudo-random number of repetitions based on results of the determination.

5. The activator node of any one of claims 1 to 4, wherein

the at least one device includes a single Internet of Things (IoT) device or a plurality of IoT devices; and
a different pseudo-random number of repetitions for transmission is determined for each IoT device of the plurality of IoT devices.

6. The activator node of any one of claims 1 to 5, wherein

the authentication configuration includes the repetition delay parameter, and the repetition delay parameter includes a fixed delay period between transmissions of the plurality of activation signals to the at least one device; and
the activator node is further caused to,
determine whether to transmit at least one second activation signal of the plurality of activation signals to the at least one device based on an authentication status of the at least one device determined by the at least one reader node, and
transmit the at least one second activation signal to the at least one device according to the fixed delay period based on results of the determination.

7. The activator node of any one of claims 1 to 6, wherein the activator node is further caused to:

receive the repetition information from a network node, the repetition information including the repetition delay parameter, and the repetition delay parameter including at least one pseudo-random delay period between transmissions of the plurality of activation signals to the at least one device;
determine whether to transmit at least one second activation signal of the plurality of activation signals to the at least one device based on an authentication status of the at least one device determined by the at least one reader node; and
transmit the at least one second activation signal of the plurality of activation signals to the at least one device according to the at least one pseudo-random delay period based on results of the determination.

8. The activator node of any one of claims 1 to 7, wherein the activator node is further caused to:

receive the repetition information from a network node, the repetition information including the repetition delay parameter, and the repetition delay parameter including a seed for pseudo-randomly generating a delay period between transmissions of the plurality of activation signals to the at least one device;
determine whether to transmit at least one second activation signal of the plurality of activation signals to the at least one device based on an authentication status of the at least one device determined by the at least one reader node;
determine at least one pseudo-random delay period using the seed; and
transmit the at least one second activation signal of the plurality of activation signals to the at least one device according to the at least one pseudo-random delay period based on results of the determination.

9. The activator node of any one of claims 1 to 8, wherein the activator node is further caused to:

receive an authentication message from the at least one reader node corresponding to the at least one device, the authentication message indicating that the at least one device is not authenticated; and
disable transmission of remaining activation signals of the plurality of activation signals to the at least one device based on the authentication message.

**10.** The activator node of any one of claims 1 to 9, wherein

the authentication configuration includes a set of carrier indexes for transmission of the activation signal to the at least one device; and
the activator node is further caused to transmit at least one second activation signal of the plurality of activation signals to the at least one device according to the set of carrier indexes.

**11.** The activator node of any one of claims 1 to 10, wherein

the authentication configuration includes a set of transmission power levels for transmission of the activation signal to the at least one device; and
the activator node is further caused to transmit at least one second activation signal of the plurality of activation signals to the at least one device according to the set of transmission power levels.

**12.** A reader node, comprising:

a memory storing computer readable instructions; and
processing circuitry configured to execute the computer readable instructions to cause the reader node to,
obtain authentication configuration associated with at least one device, the authentication configuration including at least one of a repetition number parameter and a repetition delay parameter;
determine whether at least one responsive signal is received from the at least one device in response to a first activation signal transmitted to the at least one device by an activator node; and
determine whether the at least one device is authentic based on results of the determination of whether the at least one responsive signal was received and the authentication configuration.

**13.** The reader node of claim 12, wherein

the authentication configuration includes the repetition number parameter, and the repetition number parameter includes a number of repetitions for transmission of a plurality of activation signals to the at least one device by the activator node; and
the reader node is further caused to,
determine whether a number of responsive signals received from the at least one device in response to the plurality of activation signals transmitted to the at least one device by the activator node matches the number of repetitions; and
determine whether the at least one device is authentic based on results of the determination of the number of responsive signals matching the number of repetitions.

**14.** The reader node of any one of claims 12 to 13, wherein

the authentication configuration includes the repetition delay parameter, and the repetition delay parameter includes at least one delay period between transmissions of a plurality of activation signals to the at least one device; and
the reader node is further caused to,
determine an elapsed time between each responsive signal received from the at least one device in response to the plurality of activation signals transmitted to the at least one device by the activator node, and
determine whether the at least one device is authentic based on the determined elapsed time, the delay period, and an estimated differential time between the at least one device and the reader node.

**15.** A method of operating an activator node comprising:

obtaining authentication configuration associated with at least one device, the authentication configuration including repetition information, the repetition information including at least one of a repetition number parameter and a repetition delay parameter; and
transmitting at least a first activation signal of a plurality of activation signals to the at least one device based on the repetition information, the first activation signal causing the at least one device to transmit a responsive signal to at least one reader node.

**FIG. 1**

2000

PROCESSING CIRCUITRY

2100

2200

CORE NETWORK
INTERFACE

2400

WIRELESS ANTENNA
ARRAY

2500

MEMORY

2300

# FIG. 2

<u>3000</u>

PROCESSING CIRCUITRY

<u>3100</u>

<u>3200</u>

WIRELESS ANTENNA
PANEL

<u>3400</u>

I/O DEVICE(S)

<u>3700</u>

ENERGY HARVESTING
DEVICE(S)

<u>3500</u>

SENSOR(S)

<u>3800</u>

ENERGY STORAGE
DEVICE(S)

<u>3600</u>

MEMORY

<u>3300</u>

# FIG. 3

FIG. 4

**FIG. 5**

FIG. 6

**FIG. 7**